**Europäisches Patentamt**

**European Patent Office**

**Office européen des brevets**

(11) Veröffentlichungsnummer: **0 095 068**
**B1**

(12) **EUROPÄISCHE PATENTSCHRIFT**

(45) Veröffentlichungstag der Patentschrift:
**14.01.87**

(51) Int. Cl.⁴: **B 65 G 35/06**

(21) Anmeldenummer: **83104382.3**

(22) Anmeldetag: **04.05.83**

(54) **Transportanlage.**

(30) Priorität: **25.05.82 CH 3202/82**

(43) Veröffentlichungstag der Anmeldung:
**30.11.83 Patentblatt 83/48**

(45) Bekanntmachung des Hinweises auf die Patenterteilung:
**14.01.87 Patentblatt 87/3**

(84) Benannte Vertragsstaaten:
**AT BE CH DE FR GB IT LI NL SE**

(56) Entgegenhaltungen:
**AT-B-333 845**
**DE-A-2 629 528**

(73) Patentinhaber: **Feramatic AG, CH- 8340 Hinwil (CH)**

(72) Erfinder: **Eberle, Jürg, Sonnenhofstrasse 8, CH-
8340 Hinwil (CH)**

(74) Vertreter: **Patentanwälte Schaad, Balass &
Partner, Dufourstrasse 101 Postfach, CH- 8034
Zürich (CH)**

LIBER, STOCKHOLM 1987

## Beschreibung

Die Erfindung betrifft eine Transportanlage gemäss dem Oberbegriff des Anspruches 1 (bekannt aus AT-B-333 845).

Beim Befahren gekrümmter Bahnen treten Zentrifugalkräfte auf, die am Fahrzeug und am Transportgut angreifen. Diese Kräfte können bei Stückgut durch entsprechende Befestigung kompensiert werden. Bei Schüttgut und Flüssigkeiten, ist nur eine Befestigung des Behälters, nicht jedoch des Gutes selber möglich. Solche Behälter müssen deshalb auch noch dicht verschlossen werden. Die Notwendigkeit der Befestigung bzw. des dichten Verschliessens, die sogar für kürzere Transportstrecken, wie innerhalb eines Raumes oder einer Fabrikationsanlage, erforderlich ist, erhöht den zeitlichen und materiellen Aufwand, was wiederum eine nachteilige Wirkung auf die Wirtschaftlichkeit des Transportvorganges hat. Diese Zentrifugalkräfte können durch entsprechende Neigung des Fahrzeuges kompensiert werden. Die Neigung kann bei Zweischienenfahrzeugen durch Ueberhöhung einer Schiene und bei Strassen durch Ueberhöhung der Fahrfläche an der Kurvenaussenseite erzielt werden.

Aus der AT-B 333 845 ist ein Motorfahrwerk mit einem über eine Traverse gekoppelten Rollenlaufwerk auf je einem C-förmigen Träger bekannt. Jeder Träger weist eine auf ein Schiene aufliegende Laufrolle auf. Im unteren Bereich jedes Trägers befinden sich auf einem getrennt angeordneten, querverlaufenden Träger Führungsrollen, die am unteren Flansch der Laufschiene anliegen. Somit besitzt jede Laufrolle ein ihr zugeordnetes, unter ihr befindliches Führungsrollenpaar, das eine vollständige vertikale Stabilisierung des Motorfahrwerkes sowie des Rollenlaufwerkes garantiert, d.h. jede Neigung des Fahrwerkes verhindert.

Aus der DE-A 2 629 528 ist eine Kugelgelenkgliederkette mit Laufrädern, die sich in einem Führungskanal bewegen und mit zwischen den Flanschen des letzteren angeordneten Führungsrädern bekannt. Die Kugelgelenkgliederkette besitzt einen Ausleger, der mit Mitteln zum Festhalten von Fördergut versehen ist.

Aufgabe der vorliegenden Erfindung war es, eine Transportanlage der eingangs genannten Art zu schaffen, auf deren zweidimensionalen Strecken, d.h. in deren Kurven, sich das Fahrgestell, ohne besondere bauliche Ausgestaltung des Streckenabschnittes, nach der Kurveninnenseite neigt.

Die gestellte Aufgabe wird erfindungsgemäss durch die Merkmale des kennzeichnenden Teils des Anspruches 1 gelöst.

Die besondere Anordnung des Führungsrollenpaares und der Lauräder zueinander, die über das Fahrgestell starr miteinander verbunden sind und deren Verbindungslinien ein Dreieck bilden, sowie die Ausgestaltung der Laufflächen der Laufräder und der Stützfläche der Schiene bewirken eine Neigung des Fahrgestells nach der Innenseite der jeweils befahrenen Kurve.

Beim Befahren einer Kurve entspricht die Verbindungslinie der Laufräder einer Sehne, d.h. einer innerhalb dieser Kurve liegenden Geraden. Gleichzeitig folgt das zwischen den Laufrädern angeordnete Führungsrollenpaar entlang dem Führungssteg der Kurve, d.h. einer ausserhalb der Sehne liegenden Linie. Als Folge werden die Laufräder nach Innen gedrückt und das Dreieck, dessen Ecken durch die Laufräder und das Führungsrollenpaar definiert sind, neigt sich nach der Innenseite der Kurve. Dabei beschreiben die Laufräder mit den Laufflächen nicht nur der Kurve entsprechende gekrümmte Linien mit zweidimensionalem Verlauf, sondern eine dreidimensional verlaufende gekrümmte Linie. Die seitliche Bewegung der Laufräder wird durch die komplementär gekrümmten aufeinanderliegenden Flächen der Schiene und der Laufräder ermöglicht, wobei die Stützflächen ausser der Stütz auch noch eine Führungsfunktion haben. Da die Stellung des Fahrgestells durch das von den Laufrädern und dem Führungsrollenpaar gebildete Dreieck definiert ist, entspricht eine Aenderung des Neigungswinkels des Dreiecks auch einer Aenderung der Neigung des Fahrgestells. Der grösste mögliche Neigungswinkel des Fahrgestells wird durch die Lage des Führungsrollenpaares, d.h. durch deren Abstand zu der Verbindungslinie der Laufräder, bestimmt. Bei Verkleinerung dieses Abstandes kann das Fahrgestell beim Befahren einer Kurve stärker geneigt werden.

Die Neigung des Fahrgestells in der Kurve kann mit dem Verhalten eines Motorradfahrers verglichen werden, der sich zur Kompensation der in einer Kurve auftretenden Zentrifugalkräfte nach der Innenseite der Kurve neigt.

Durch die Neigung des Fahrgestells der erfindungsgemässen Transportanlage werden die am Transportgut angreifenden Zentrifugalkräfte in analoger Weise, wie vom Fahrer des Motorrades, kompensiert. Diese Kompensation ermöglicht den Transport von losen Gütern und unbefestigten offenen Behältern ohne Verrutschen von Stückgut oder Ueberschwappen des Behälterinhaltes beim Befahren einer kurvenförmigen Transportstrecke.

Bevorzugte Ausbildungen der Erfindung bilden den Gegenstand der Ansprüche 1 bis 5.

Im folgenden wird ein Ausführungsbeispiel des Erfindungsgegenstandes anhand der Figuren näher erläutert. Es zeigt rein schematisch:

Fig. 1 die Seitenansicht einer erfindungsgemässen Transportanlage, teilweise im Schnitt;

Fig. 2 die Draufsicht der Transportanlage gemäss Fig. 1;

Fig. 3 den Schnitt durch die Transportanlage gemäss Fig. 2 entlang der Linie III-III, wobei

Fahrgestell und Laufrad ihrerseits teilweise im Schnitt dargestellt sind;

Fig. 4 den Schnitt durch die Transportanlage gemäss Fig. 2 entlang der Linie IV-IV.

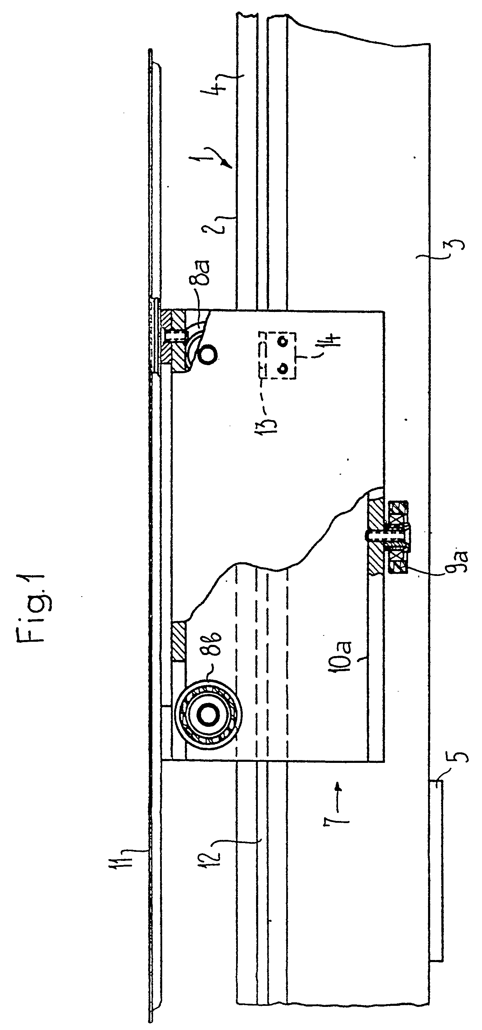

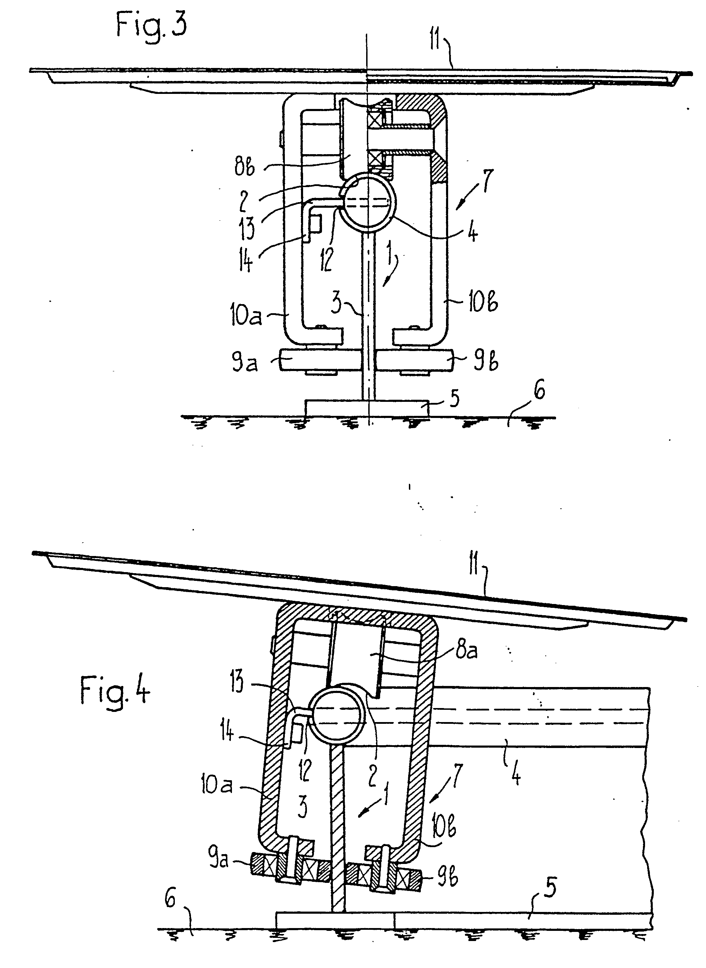

Die Transportanlage in Fig. 1 hat eine Führungsschiene 1 mit einer Stützfläche 2 und einem unter der Stützfläche angeordneten lotrechten Führungssteg 3. Die Stützfläche 2 wird, wie in Fig. 3 und 4 gezeigt, von einer rohrförmigen Hohlschiene 4 gebildet. Die Schiene 1 steht mit zum Führungssteg senkrechten Unterlageelementen 5 auf einer Unterlage 6, z.B. einem Boden, wo sie auch befestigt sein kann. Ein Fahrgestell 7 liegt mit zwei Laufrädern 8a, 8b, mit konkaven Laufflächen, auf der Stützfläche 2 der Schiene 1 auf und wird von einem zwischen den Laufrädern 8a, 8b angeordneten Führungsrollenpaar 9a, 9b, das an, die Hohlschiene 4 untergreifenden, Auslegern 10a, 10b, beidseitig des Führungssteges, angeordnet ist, geführt. Oben am Fahrgestell 7 ist eine Tragpalette 11 für transportiertes Gut befestigt.

Die Hohlschiene 4 weist einen seitlichen Spalt 12 auf, in den ein Mitnehmer 13 eingreift, der mit einem (nicht gezeigten) Antriebsmittel, z.B. einer Kugelgelenkgliederkette, in Verbindung steht. Das nach unten gebogene Ende 14 des Mitnehmers 13 ist am Ausleger 10a befestigt.

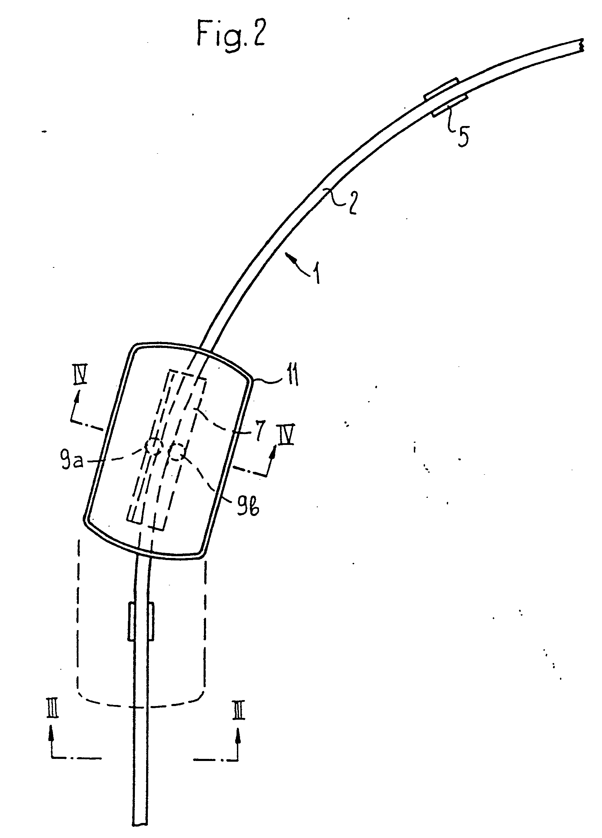

Beim Befahren einer Kurve (Fig. 2 und 4) wird das Führungsrollenpaar (9a, 9b) entlang dem Führungssteg (13), d.h. ausserhalb der die Laufräder (8a, 8b) verbindenden Geraden geführt. Dadurch nimmt das von den Laufrädern und dem Führungsrollenpaar definierte Dreieck eine gegenüber der beim Geradeausfahren eingenommenen geneigte Lage ein, was der gleichen geneigten Lage des Fahrgestells 2 entspricht.

Das Fahrgestell 2 kann mit bekannten Mitteln angetrieben werden. Bevorzugt wird eine in der Hohlschiene 1 geführte und mit dem Fahrgestell 7 in Verbindung stehende endlose Kugelgelenkgliederkette, die den Kurven der Schiene 1 problemlos folgen kann.

Der Führungssteg 3 kann ohne Unterbruch oder nur stellenweise mit der Stützfläche 2 verbunden sein.

Anstelle der Tragpalette 11, die auch an einer anderen Stelle des Fahrgestells 7 angeordnet und befestigt sein kann, kann auch ein Behälter vorgesehen sein.

Das bei der Neigung des Fahrgestells notwendige Spiel zwischen Führungssteg 3 und Führungsrollen 9a, 9b kann z.B. durch konvexe oder elastische Führungsflächen der Rollen, deren federnde Befestigung oder biegsame Führungsleisten erreicht werden.

## Patentansprüche

1. Angetriebene Transportanlage mit mindestens einem auf einer Schiene verfahrbaren Fahrgestell (7) mit zwei in seiner Längsachse angeordneten Laufrädern (8a, 8b), deren gekrümmte Laufflächen auf einer zu den Laufflächen komplementär gekrümmten Stützfläche (2) der Schiene (1) aufliegen und mit einem die Stützfläche (2) untergreifenden Führungsrollenpaar (9a, 9b), dadurch gekennzeichnet, dass das Führungsrollenpaar (9a, 9b) in Längsrichtung des Fahrgestells zwischen den Laufrädern (8a, 8b) angeordnet und mit letzteren über das Fahrgestell (7) starr in Form eines Dreiecks verbunden ist und an einem lotrechten, zwischen die Führungsrollen eingreifenden Führungssteg (13) der Schiene (1) geführt wird.

2. Transportanlage nach Anspruch 1, dadurch gekennzeichnet, dass die Laufflächen der Laufräder (8a, 8b) konkav und die Stützfläche (2) der Schiene (1) kreiszylindrisch konvex ist.

3. Transportanlage nach Anspruch 2, dadurch gekennzeichnet, dass die Schiene (1) eine rohrförmige Hohlschiene (4) ist.

4. Transportanlage nach Anspruch 3, dadurch gekennzeichnet, dass in der Hohlschiene (4) als Antriebsmittel eine Kugelgelenkgliederkette geführt ist.

5. Transportanlage nach Anspruch 4, dadurch gekennzeichnet, dass die Führungsrollen (9a, 9b) an Auslegern (10a, 10b), die die Stützfläche (2) untergreifen, angeordnet sind, an einem der Ausleger (10a) ein Mitnehmer (13) befestigt ist, der in einen Spalt (12) der Schiene (1) eingreift und mit der Kugelgelenkgliederkette in Verbindung steht.

## Claims

1. Driven transport system with at least one undercarriage (7) movable on a rail, with two running wheels (8a, 8b) which are arranged in the longitudinal axis of the said undercarriage (7) and of which the curved treads rest on a supporting surface (2) of the rail (1), the said supporting surface (2) being curved to match the treads, and with a pair of guide rollers (9a, 9b) engaging under the supporting surface (2), characterised in that the pair of guide rollers (9a, 9b) is arranged, in the longitudinal direction of the undercarriage, between the running wheels (8a, 8b) and is connected rigidly to the latter in the form of a triangle via the undercarriage (7) and is guided on a vertical guide web (13) of the rail (1), the said guide web (13) engaging between the guide rollers.

2. Transport system according to Claim 1, characterised in that the treads of the running wheels (8a, 8b) are concave, and the supporting surface (2) of the rail (1) is convex in circular-cylindrical form.

3. Transport system according to Claim 2, characterised in that the rail (1) is a tubular hollow rail (4).

4. Transport system according to Claim 3, characterised in that a ball-jointed link chain is guided as a drive means in the hollow rail (4).

5. Transport system according to Claim 4, characterised in that the guide rollers (9a, 9b) are arranged on arms (10a, 10b) which engage under the supporting surface (2), and fastened to one of the arms (10a) is a driver (13) which engages in a gap (12) in the rail (1) and which is connected to the ball-jointed link chain.

## Revendications

1 - Installation de transport entraînée, comprenant au moins un chariot (7) qui peut se déplacer le long d'un rail, comprenant deux roues de roulement (8a, 8b) disposées sur son axe longitudinal, dont les surfaces de roulement incurvées s'appuient sur une surface d'appui (2) du rail (1) qui est incurvée avec une forme complémentaire de celle des surfaces de roulement, et une paire de galets de guidage (9a, 9b) qui sont engagés au-dessous de la surface d'appui, caractérisée en ce que la paire de galets de guidage (9a, 9b) est disposée entre les roues de roulement (8a, 8b) dans la direction longitudinale du chariot, et reliée rigidement à ces roues par l'intermédiaire du chariot (7), pour former un triangle, et guidée en prenant appui contre l'âme de guidage verticale (13) du rail (1) qui est engagée entre les galets de guidage.

2 - Installation de transport selon la revendication 1, caractérisée en ce que les surfaces de roulement des roues de roulement (8a, 8b) sont concaves et la surface d'appui (2) du rail (1) est convexe avec une configuration cylindrique de révolution.

3 - Installation de transport selon la revendication 2, caractérisée en ce que le rail (1) est un rail creux tubulaire (4).

4 - Installation de transport selon la revendication 3, caractérisée en ce que, dans le rail creux (4), circule une chaîne à maillons à articulations à rotule servant de moyens d'entraînement.

5 - Installation de transport selon la revendication 4, caractérisée en ce que les galets de guidage (9a, 9b) sont montés sur des bras (10a, 10b) qui sont engagés sous la surface d'appui (2), en ce qu'à l'un des bras (10a), est fixé un taquet entraîneur (13) qui est engagé dans une fente (12) du rail (1) et est en liaison avec la chaîne à maillons à articulations à rotule.

Fig.1

# Fig. 2

Fig. 3

Fig. 4